# EUROPEAN PATENT APPLICATION

(11) **EP 0 675 152 A2**
(43) Date of publication of application: **04.10.1995**
(21) Application number: 95104722.4
(22) Date of filing: 30.03.1995
(51) Int. Cl.: C08G 77/50

(54) **Organosilicon polymers and method of preparation**

(30) Priority: 31.03.1994 JP 87989/94
(71) Applicant: Dow Corning Toray Silicone Company, Limited, Tokyo 103 (JP)
(72) Inventor: Kobayashi, Hideki, Dow Corning Toray Silicone, Ichihara-shi, Chiba Prefecture (JP)
(74) Representative: Spott, Gottfried, Dr.

(57) **Abstract**

Organosilicon polymers with degrees of polymerization of 2 to 10,000, whose main chain is composed of repeat units comprising a siloxane ring bonded to a group selected from C₂ to C₁₀ alkylene groups, organic groups represented by -R²(OR²)_{y}- where R² is C₂ to C₂₀ alkylene and y is an integer with a value of a least 1, organic groups represented by -R²-SiR₂-R²-where R is a C₁ to C₁₀ monovalent hydrocarbon group free of aliphatically unsaturated bonds and R² is C₂ to C₂₀ alkylene, and organic groups represented by -R²-(R₂SiO)_{z}-R²- where R is a C₁ to C₁₀ monovalent hydrocarbon group free of aliphatically unsaturated bonds, R² is C₂ to C₂₀ alkylene, and z = 0 - 200. Also, methods for preparing the organosilicon polymers are described.

## Description

The invention relates to organosilicon polymers which are unreported in the literature. The invention also relates to methods for their preparation.

The polydimethylsiloxanes (Me₂SiO)ₘ (Me = methyl and m = a positive integer) are typical examples of organosilicon polymers. They are generally oils at room temperature and are used in many fields of industry. The polymethylsilsesquioxanes, which have the average unit formula (MeSiO_{3/2})ₘ (Me = methyl and m = a positive integer), are generally solids at room temperature and are under examination for use in specialty fields, for example, as resists in JP-A 5-83568.

However, polydimethylsiloxanes generally have low surface tensions of 20 to 22 mN/m and are poorly compatible with organic polymers that typically have surface tensions of at least 30 mN/m. In addition, because polydimethylsiloxanes are straight chain polymers, they readily depolymerize under strongly acidic or strongly alkaline conditions, and are thereby converted into low-molecular-weight cyclic siloxanes. Contrastingly, the polymethylsilsesquioxanes are very resistant to acids and alkalis. However, because they are generally solids at room temperature, their range of application is limited and their suitability also varies.

The present invention takes as its object the introduction of organosilicon polymers that eliminate the problems associated with the above-described organosilicon polymers. An additional object of the invention is to provide a method for preparing said organosilicon polymers.

The present invention introduces an organosilicon polymer whose degree of polymerization (DP) is 2 to 10,000 and whose main chain is composed of repeat units with formula (a) 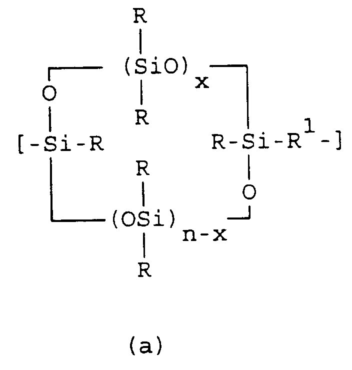
in which R represents C₁ to C₁₀ monovalent hydrocarbon groups that are free of aliphatically unsaturated bonds, R¹ represents C₂ to C₁₀ alkylene groups and organic groups with the formula -R²(OR²)_{y}- R² represents C₂ to C₂₀ alkylene groups, y is an integer with a value of at least 1, n is an integer with a value from 1 through 13, x is an integer with a value from 0 through 13, and n ≧ x.

The invention also relates to a method for preparing the aforesaid organosilicon polymer with DP = 2 to 10,000 whose main chain is composed of repeat unit with formula (a), said method comprising the addition polymerization of
(A) cyclic siloxane with the general formula 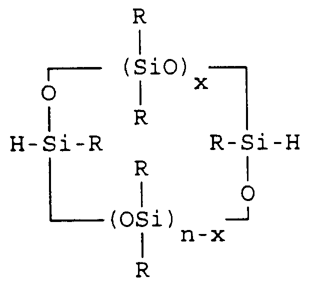 where R represents C₁ to C₁₀ monovalent hydrocarbon groups that are free of aliphatically unsaturated bonds, n is an integer with a value from 1 through 13, x is an integer with a value from 0 through 13, and n ≧ x
   with
(B) a compound selected from C₃ to C₁₀ unsaturated aliphatic hydrocarbons that contain 2 carbon-carbon double bonds, C₂ to C₁₀ unsaturated aliphatic hydrocarbons that contain 1 carbon-carbon triple bond, and compounds with the formula R³(OR²)ₚOR³ where R² represents C₂ to C₂₀ alkylene groups, R³ represents C₂ to C₂₀ alkenyl groups, and p is zero or an integer with a value of at least 1,
   in the presence of
(C) a hydrosilylation-reaction catalyst.

The invention further relates to an organosilicon polymer whose degree of polymerization is 2 to 10,000 and whose main chain is composed of repeat unit with formula (b) 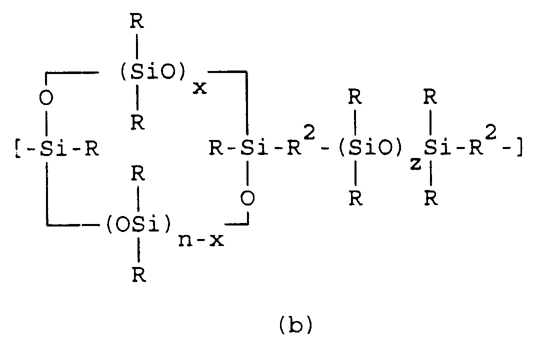
in which R represents C₁ to C₁₀ monovalent hydrocarbon groups that are free of aliphatically unsaturated bonds, R² represents C₂ to C₂₀ alkylene groups, n is an integer with a value from 1 through 13, x is an integer with a value from 0 through 13, and n ≧ x.

Finally, the invention also relates to a method for preparing the aforesaid organosilicon polymer with DP = 2 to 10,000 whose main chain is composed of repeat unit with formula (b), said method being characterized by the addition polymerization of
(A) a cyclic siloxane with the general formula 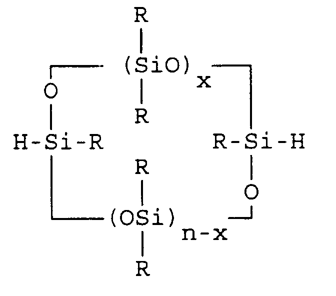 where R represents C₁ to C₁₀ monovalent hydrocarbon groups that are free of aliphatically unsaturated bonds, n is an integer with a value from 1 through 13, x is an integer with a value from 0 through 13, and n ≧ x
   with
(B') an alkenyl-endblocked organosilicon compound with the following general formula 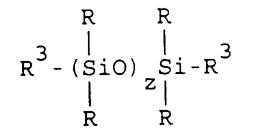 where R represents C₁ to C₁₀ monovalent hydrocarbon groups that are free of aliphatically unsaturated bonds, R³ represents C₂ to C₂₀ alkenyl groups, and z is in the range from 0 to 200
   in the presence of
(C) a hydrosilylation-reaction catalyst.

The organosilicon polymers of the present invention will now be considered in detail.

The first organosilicon polymer of the present invention has a DP of 2 to 10,000 and a main chain that is composed of repeat units with general formula (a). 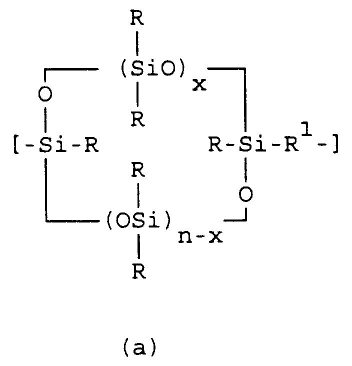
R represents C₁ to C₁₀ monovalent hydrocarbon groups that are free of aliphatically unsaturated bonds. This R is exemplified by alkyl groups such as methyl, ethyl, propyl, butyl, pentyl, hexyl, heptyl, octyl, nonyl, and decyl; aryl groups such as phenyl, tolyl, and xylyl; aralkyl groups such as benzyl and phenethyl; and haloalkyl groups such as 3,3,3-trifluoropropyl, 1H,1H,2H,2H-nonafluorohexyl, and 1H,1H,2H,2H-perfluorodecyl. Methyl and phenyl are preferred for R. Moreover, the groups R may all be the same or may differ from each other. R¹ represents C₂ to C₁₀ alkylene groups and organic groups with the formula -R²(OR²)_{y}-. The C₂ to C₁₀ alkylene groups may be straight chain or branched chain and are exemplified by ethylene, methylethylene, ethylethylene, propylethylene, butylethylene, propylene, butylene, 1-methylpropylene, pentylene, hexylene, heptylene, octylene, nonylene, and decylene. The R² in the organic group -R²(OR²)_{y}-represents C₂ to C₂₀ alkylene groups and is exemplified by ethylene and propylene groups. The groups R² may be the same or may differ from each other. The subscript y is an integer with a value of at least 1 and preferably falls in the range from 1 through 20. The organic group is exemplified by ethyleneoxypropylene, propyleneoxypropylene, and -H₆C₃(OC₂H₄)₆OC₃ H₆-. Preferred for R¹ are ethylene, propylene, butylene, and hexylene. Moreover, the groups R¹ may all be the same or may be different. The subscript n is an integer with a value from 1 to 13, wherein 2 and 3 are preferred. The subscript x is an integer with a value from 0 to 13, and n ≧ x. The organosilicon polymer of this invention may have a straight chain or cyclic molecular structure. For straight chain molecular structures, the molecular chain end group will be hydrogen atom, C₂ to C₂₀ alkenyl, or hydroxyl. Said alkenyl is exemplified by vinyl, allyl, butenyl, pentenyl, hexenyl, heptenyl, octenyl, nonenyl, and decenyl. In addition, organosilicon polymers of the present invention may contain only a single repeat unit with formula (a), or several different repeat units with formula (a).

Organosilicon polymers whose main chains are composed of repeat units with the following formulas are provided as specific examples of our organosilicon polymers whose main chain is composed of repeat units with formula (a). Hereafter, Me represents the methyl group, Et represents the ethyl group, Hx represents the hexyl group, and Ph represents the phenyl group. 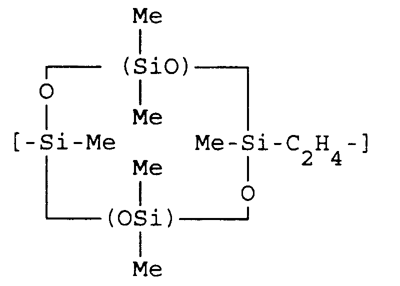 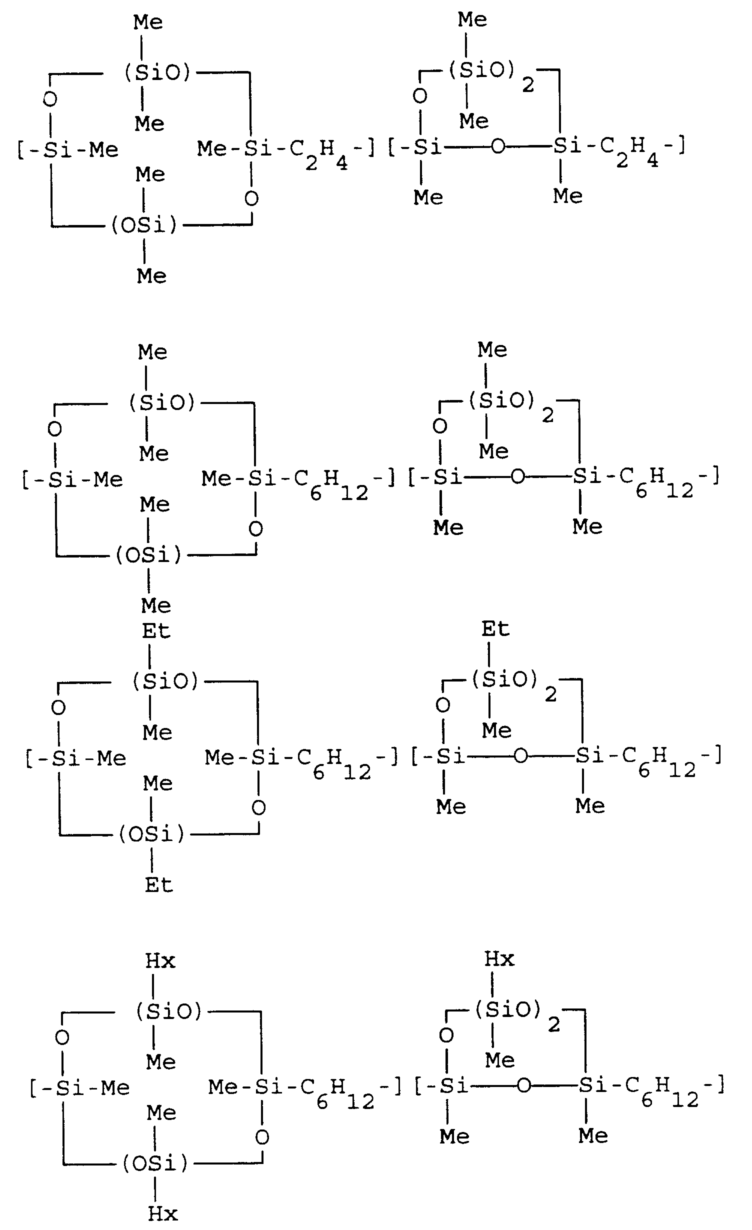 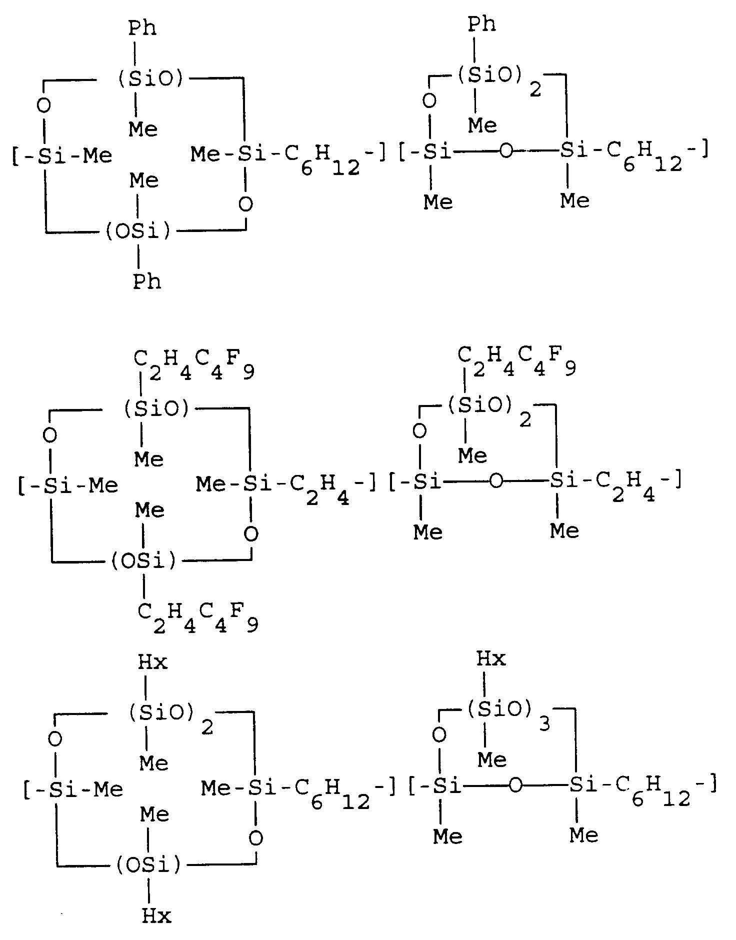
The second of our organosilicon polymers has a DP of 2 to 10,000 and a main chain that is composed of repeat units with general formula (b). 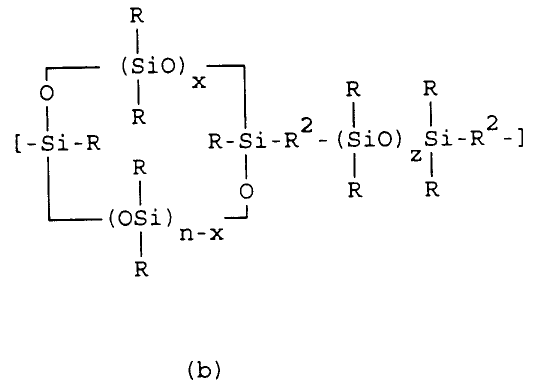
R represents C₁ to C₁₀ monovalent hydrocarbon groups that are free of aliphatically unsaturated bonds. R is exemplified by alkyl groups such as methyl, ethyl, propyl, butyl, pentyl, hexyl, heptyl, octyl, nonyl, and decyl; aryl groups such as phenyl, tolyl, and xylyl; aralkyl groups such as benzyl and phenethyl; and haloalkyl groups such as 3,3,3-trifluoropropyl, 1H,1H,2H,2H-nonafluorohexyl, and 1H,1H,2H,2H-perfluorodecyl. Methyl and phenyl are preferred for R. Moreover, the groups R may all be the same, or may differ from each other. R² represents C₂ to C₂₀ alkylene groups. The C₂ to C₂₀ alkylene groups may be straight chain or branched chain and are exemplified by ethylene, methylethylene, ethylethylene, propylethylene, butylethylene, propylene, butylene, 1-methylpropylene, pentylene, hexylene, heptylene, octylene, nonylene, and decylene. Ethylene, propylene, butylene, and hexylene are preferred. The groups R² may be the same or may differ from each other. The subscript n is an integer with a value from 1 to 13, wherein 2 and 3 are preferred. The subscript x is an integer with a value from 0 to 13, and n ≧ x. The subscript z falls in the range from 0 to 200, preferably in the range from 1 to 100, and more preferably in the range from 1 to 10. This organosilicon polymer of our invention may have a straight chain or cyclic molecular structure. For straight chain molecular structures, the molecular chain end group will be hydrogen atom, C₂ to C₂₀ alkenyl, or hydroxyl. The alkenyl is exemplified by vinyl, allyl, butenyl, pentenyl, hexenyl, heptenyl, octenyl, nonenyl, and decenyl. In addition, organosilicon polymers of this invention may contain only a single repeat unit with formula (b), or several different repeat units with formula (b).

Organosilicon polymers whose main chains are composed of repeat units with the following formulas are provided as specific examples of our invention whose main chain is composed of repeat units with formula (b). In the following formulas, Me represents the methyl group, Et represents the ethyl group, Hx represents the hexyl group, and Ph represents the phenyl group. 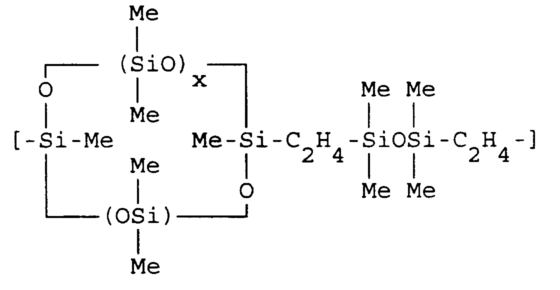 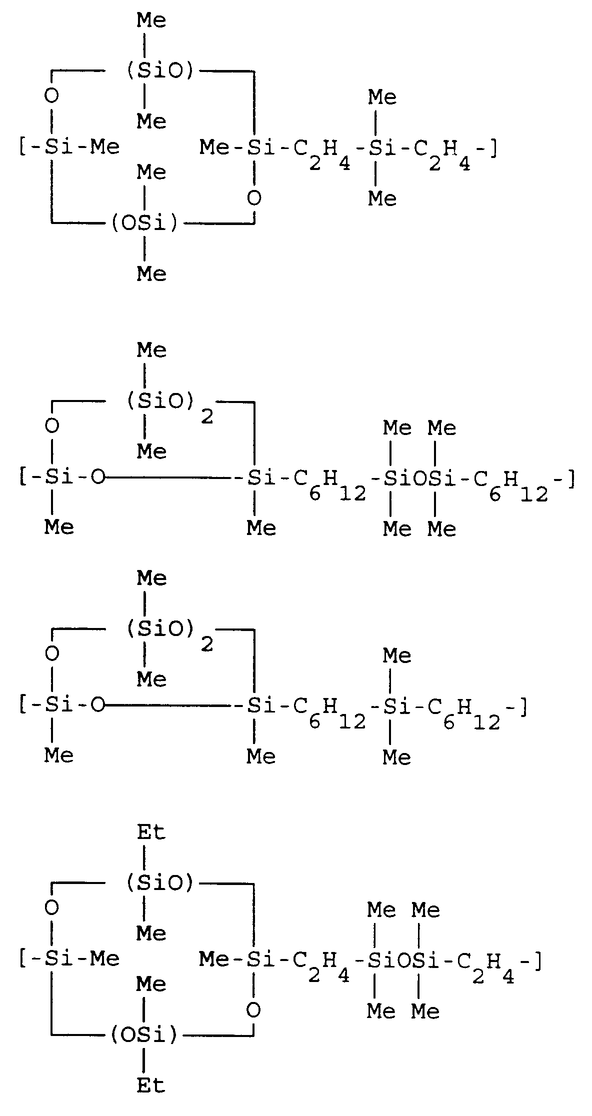 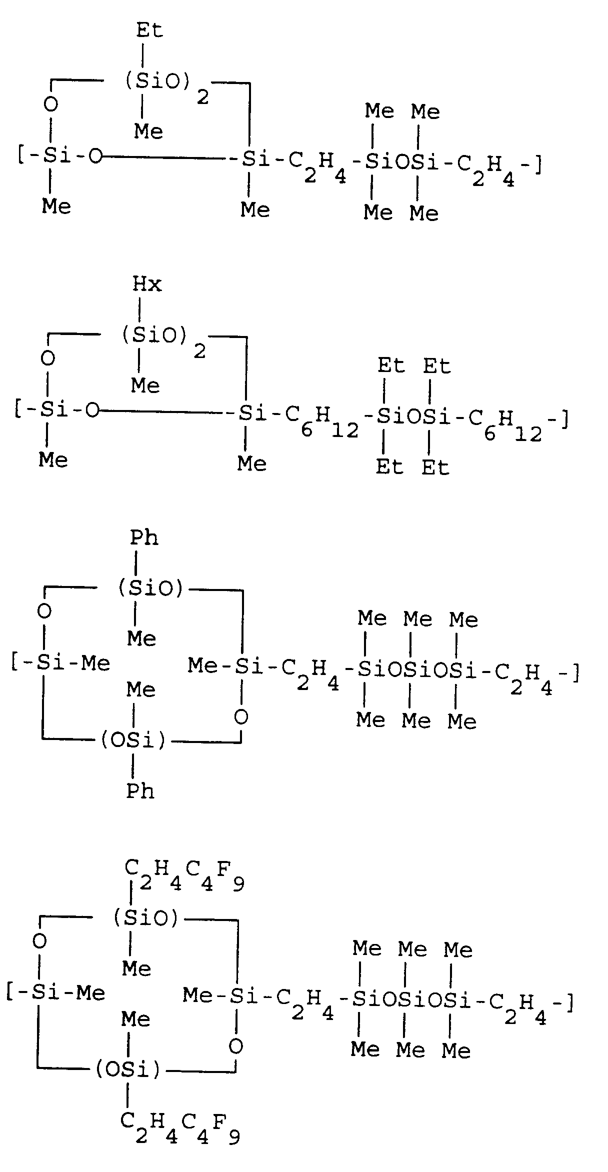 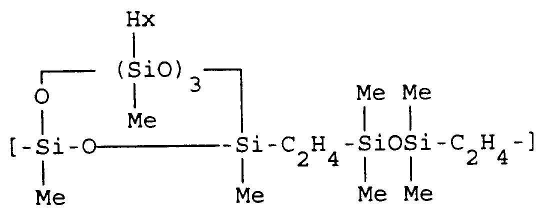
The methods for preparing our organosilicon polymers will now be considered in detail.

Organosilicon polymer whose main chain is composed of repeat units with formula (a) can be prepared by addition polymerizing
(A) a cyclic siloxane that contains 2 silicon-bonded hydrogen atomss in each molecule
   with
(B) a compound selected from C₃ to C₁₀ unsaturated aliphatic hydrocarbons that contain 2 carbon-carbon double bonds, C₂ to C₁₀ unsaturated aliphatic hydrocarbons that contain 1 carbon-carbon triple bond, and compounds with the formula R³(OR²)ₚOR³
   in the presence of
(C) a hydrosilylation-reaction catalyst.

Organosilicon polymers whose main chain is composed of repeat units with formula (b) can be prepared by addition polymerizing
(A) a cyclic siloxane that contains 2 silicon-bonded hydrogen atoms in each molecule
   with
(B') an alkenyl-endblocked organosilicon compound
   in the presence of
(C) a hydrosilylation-reaction catalyst.

The cyclic siloxane comprising component (A) has the following general formula 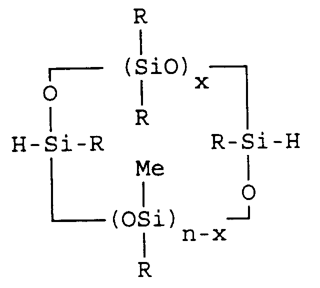
and contains 2 silicon-bonded hydrogen atoms in each molecule. R represents C₁ to C₁₀ monovalent hydrocarbon groups that are free of aliphatically unsaturated bonds. R is exemplified by alkyl groups such as methyl, ethyl, propyl, butyl, pentyl, hexyl, heptyl, octyl, nonyl, and decyl; aryl groups such as phenyl, tolyl, and xylyl; aralkyl groups such as benzyl and phenethyl; and haloalkyl groups such as 3,3,3-trifluoropropyl, 1H,1H,2H,2H-nonafluorohexyl, and 1H,1H,2H,2H-perfluorodecyl. Methyl and phenyl are preferred for R. Moreover, the groups R may all be the same or may differ from each other. The subscript n is an integer with a value from 1 to 13, wherein 2 and 3 are preferred. The subscript x is an integer with a value from 0 to 13, and n ≧ x. The instant component may consist of only a single cyclic siloxane or may take the form of a mixture of two or more types of cyclic siloxanes.

Component (A) is exemplified by cyclic siloxanes with the formulas given below. 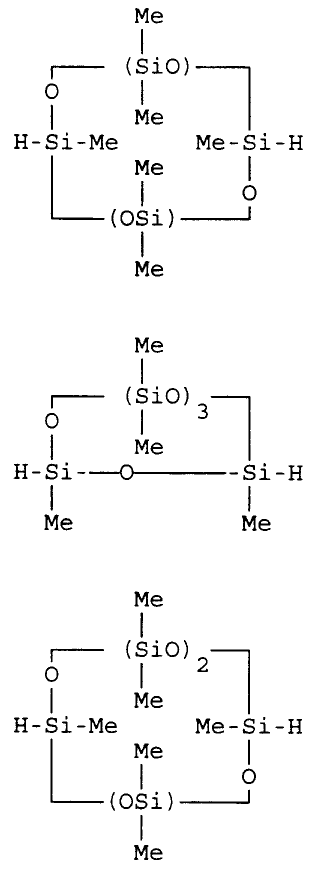 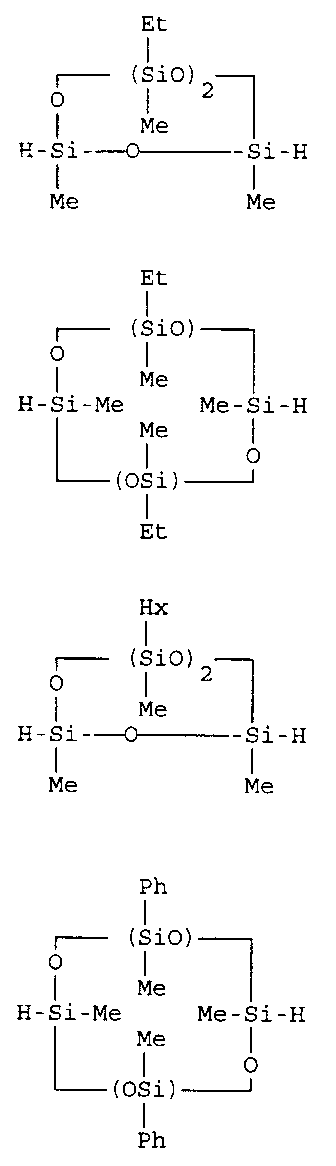 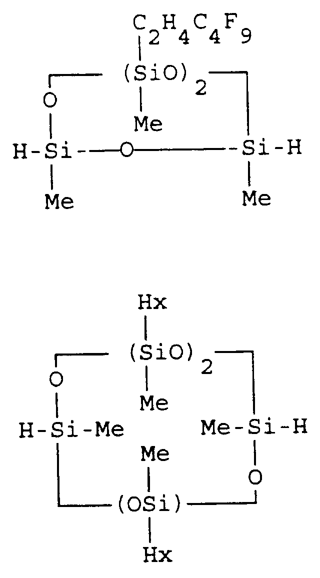
The cyclic siloxanes comprising component (A) can be prepared, for example, by running a partial addition reaction between a cyclosiloxane with the formula 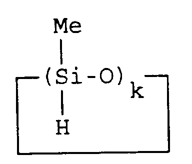
where Me = methyl and k is an integer with a value of at least 3 and an unsaturated hydrocarbon, such as, H₂C=CH₂. The cyclosiloxane 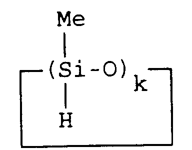
can be prepared by the hydrolysis of methyldichlorosilane or by cracking methylhydrogensiloxane in the presence of an acid catalyst.

Component (B) addition polymerizes and bonds through the silicon-bonded hydrogen in cyclic siloxane (A). Component (B) is a compound selected from C₃ to C₁₀ unsaturated aliphatic hydrocarbons that contain 2 carbon-carbon double bonds, C₂ to C₁₀ unsaturated aliphatic hydrocarbons that contain 1 carbon-carbon triple bond, and compounds with the formula R³(OR²)ₚOR³ .

The C₃ to C₁₀ unsaturated aliphatic hydrocarbons that contain 2 carbon-carbon double bonds are exemplified by 1,2-propadiene (commonly known as allene), 1,3-butadiene, 2-methyl-1,3-butadiene (commonly known as isoprene), 2,3-dimethyl-1,3-butadiene, 1,3-pentadiene, 1,4-pentadiene, 1,5-hexadiene, and 1,3-cyclohexadiene.

The C₂ to C₁₀ unsaturated aliphatic hydrocarbons that contain 1 carbon-carbon triple bond are exemplified by acetylene, propyne, 1-butyne, 2-butyne, 1-pentyne, 2-pentyne, 3-methyl-1-butyne, 3,3-dimethyl-1-butyne, 1-hexyne, 2-hexyne, 1-heptyne, 1-octyne, 4-octyne, 1-nonyne, 1-decyne, and 5-decyne.

R² in the compound R³(OR²)ₚOR³ represents C₂ to C₂₀ alkylene groups and is exemplified by ethylene, methylethylene, ethylethylene, propylethylene, butylethylene, propylene, butylene, 1-methylpropylene, pentylene, hexylene, heptylene, octylene, nonylene, and decylene. Ethylene, propylene, butylene, and hexylene are preferred for R². The respective groups R² in a compound with the given formula may all be the same, or may be different from each other. R³ represents C₂ to C₂₀ alkenyl and is exemplified by vinyl, allyl, butenyl, pentenyl, hexenyl, heptenyl, octenyl, nonenyl, and decenyl. The vinyl, allyl, and 5-hexenyl groups are preferred for R³. The respective groups R³ in a compound with the given formula may all be the same, or may be different from each other. The subscript p is zero or an integer with a value of at least 1. The compound may have a straight chain or branched chain molecular structure. This compound is exemplified by diallyl ether, polyoxyethylene terminated at both ends by allyl, and oxyethylene/oxypropylene copolymer terminated at both ends by allyl.

Component (B') also addition polymerizes and bonds through the silicon-bonded hydrogen in cyclic siloxane (A). Component (B') comprises alkenyl-endblocked organosilicon compounds with the following general formula. 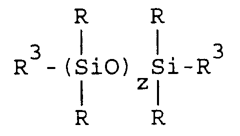
As above, R represents C₁ to C₁₀ monovalent hydrocarbon groups that are free of aliphatically unsaturated bonds. R is exemplified by alkyl groups such as methyl, ethyl, propyl, butyl, pentyl, hexyl, heptyl, octyl, nonyl, and decyl; aryl groups such as phenyl, tolyl, and xylyl; aralkyl groups such as benzyl and phenethyl; and haloalkyl groups such as 3,3,3-trifluoropropyl, 1H,1H,2H,2H-nonafluorohexyl, and 1H,1H,2H,2H-perfluorodecyl. Methyl and phenyl are preferred for R. Moreover, the groups R may all be the same or may differ from each other. R³ represents C₂ to C₂₀ alkenyl and is exemplified by vinyl, allyl, butenyl, pentenyl, hexenyl, heptenyl, octenyl, nonenyl, and decenyl. The vinyl, allyl, and 5-hexenyl groups are preferred for R³. The subscript z has a value in the range from 0 to 200, preferably in the range from 1 to 100, and more preferably in the range from 1 to 10. Component (B') is exemplified by 1,3-divinyltetramethyldisiloxane and divinyldimethylsilane.

Component (B) or (B') are preferably added in our preparative methods in a quantity that affords values of 0.5 : 1.0 to 1.5 : 1.0 for the ratio of the number of moles of component (A) to the number of moles of component (B) or (B'). When the preparation is desired of an organosilicon polymer according to our invention that has a relatively high molecular weight, the ratio of the number of moles of component (A) to the number of moles of component (B) or (B') is preferably 1 : 1. When component (A) is added in excess over component (B) or (B'), hydrogen atoms will constitute the molecular chain terminals of the resulting organosilicon polymer of our invention. Constratingly, when component (B) or (B') is added in excess over component (A), alkenyl will constitute the molecular chain terminals of the resulting organosilicon polymer of this invention. The presence of an active hydrogen-containing compound, e.g., water or alcohol, in the reaction system will generate hydroxyl at the molecular chain terminals of the resulting organosilicon polymers of the present invention.

The hydrosilylation-reaction catalyst comprising component (C) accelerates the addition reaction between the silicon-bonded hydrogen in component (A) and the aliphatically unsaturated bonds in component (B) or the alkenyl groups in component (B'). Component (C) is exemplified by platinum, rhodium, and palladium catalysts or by organoperoxides. The platinum catalysts are preferred for their ability to substantially accelerate the addition polymerization. The platinum catalysts are exemplified by platinum black, platinum-on-silica micropowder, platinum-on-carbon powder, chloroplatinic acid, alcohol solutions of chloroplatinic acid, platinum/vinylsiloxane complexes, and platinum/olefin complexes. This component should be added in catalytic quantities and is preferably added in the range of 0.1 to 500 weight parts for each 1,000,000 weight parts of the combined quantity of components (A) and (B) or (B').

The preparative methods of the present invention characteristically comprise the execution of an addition polymerization between component (A) and component (B) or (B') in the presence of component (C), but these components may be added in any order. For example, component (B) or (B') may be gradually added to a stirred and heated system of mixed components (A) and (C); or component (A) may be gradually added to a stirred and heated system of mixed components (B) or (B') and (C); or component (C) may be gradually added to a stirred and heated system of mixed components (A) and (B) or (B'); or a mixed system of components (A), (B) or (B'), and (C) may be stirred and heated; or, when component (B) is a gas, gaseous component (B) may be introduced into a mixed system of components (A) and (C).

Organic solvents may be used in our preparative methods to make possible the preparation of higher molecular weight organosilicon polymers. Organic solvents are exemplified by aromatic hydrocarbon solvents such as toluene and xylene; aliphatic hydrocarbon solvents such as hexane, heptane, octane, and nonane; alicyclic hydrocarbon solvents such as cyclohexane, cycloheptane, and cyclooctane; and fluorine-containing aromatic hydrocarbon solvents such as trifluoromethylbenzene, 1,3-bis(trifluoromethyl)-benzene, and methylpentafluorobenzene.

In addition to components (A) - (C), a chain-transfer agent can be added in our preparative methods to control the molecular weight of our organosilicon polymers. This chain-transfer agent will consist of trace amounts of a compound possessing a single carbon-carbon double bond, or a single silicon-bonded hydrogen in each molecule.

No particular restrictions apply to the addition polymerization conditions in our preparative methods. However, when the addition polymerization is run at ambient pressure, the reaction temperature will range from room temperature up to the boiling point of component (A), (B) or (B') or the boiling point of the organic solvent used. The addition polymerization can be run under elevated pressure when component (B) or (B') or the organic solvent has a relatively low boiling point.

The organosilicon polymers of the present invention as described above are novel and have a specific and regular chemical structure formed by the bonding of the repeat units described hereinbefore. These organosilicon polymers are typically viscous liquids at room temperature. Because they have surface tension values of approximately 22 to 30 mN/m, which lie between the surface tensions of the polydimethylsiloxanes and organic polymers, they are much more compatible with organic resins than are conventional polydimethylsiloxanes. They are useful as additives for improving the properties of a variety of organic resins, for example, for improving the water repellency, surface lubricity, and impact resistance. They are useful as physical-property improvers/modifiers. Moreover, the viscosity of low-viscosity polydimethylsiloxanes can be increased by mixing therein organosilicon polymers of the present invention. Our organosilicon polymers are also strongly resistant to hydrolysis because they are resistant to molecular chain scission by ionics, e.g., acids, and alkalis. They can therefore be used as industrial materials and raw materials that exploit the characteristic features described above. Based on its capacity to addition react with organofunctional group-containing alkenes, the organosilicon polymer bearing hydrogen at its molecular chain terminals can also function as a precursor for the preparation of organofunctional group-endblocked organosilicon polymers. Based on its capacity to addition react with vinyl-containing organic polymers, the hydrogen-terminated organosilicon can further be used as a precursor for the preparation of siloxane ring-containing organic materials (composite polymers). The alkenyl-endblocked organosilicon polymers, through their addition reaction with organofunctional hydrosilanes, can function as precursors in the preparation of organofunctional group-endblocked organosilicon polymers. Their capacity to undergo organoperoxide-induced crosslinking with alkenyl-containing organic polymers also makes possible their use as precursors for the preparation of siloxane ring-containing organic materials (composite polymers). Finally, the hydroxyl-endblocked organosilicon polymers can be used as precursors for organofunctional group-endblocked organosilicon polymers (reaction with organofunctional halosilane or silazane) and for the preparation of composite polymers (condensation through the hydroxyl with various types of organofunctional groups).

The invention is explained in greater detail below through examples in which cP indicates centipoise. The viscosity values reported in the examples were measured at 25°C.

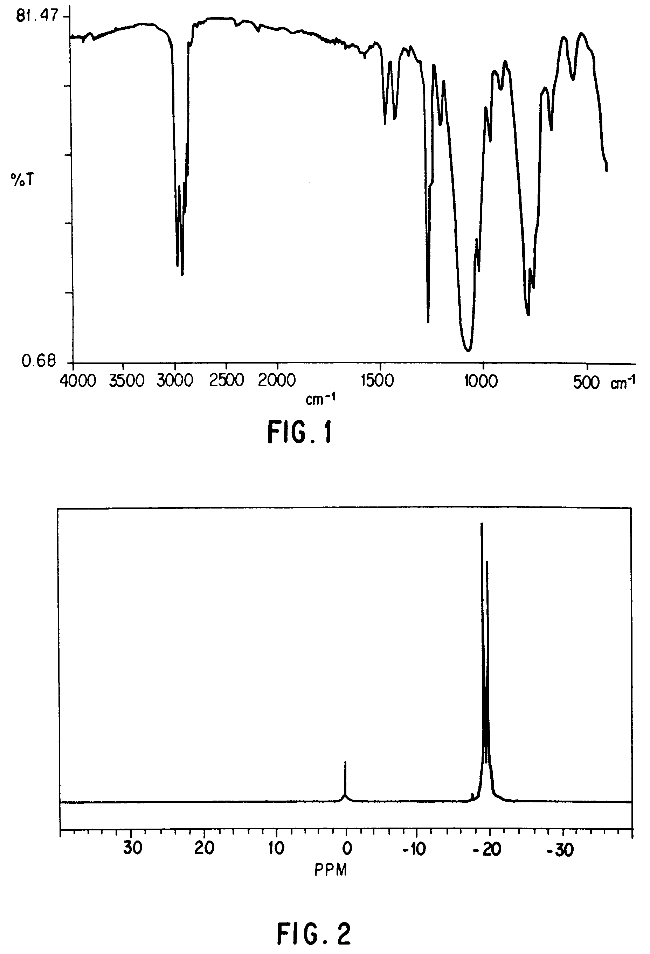

Figure 1 is the Fourier-transform infrared absorption spectrogram of the organosilicon polymer prepared in Example 1.

Figure 2 is the ²⁹Si-nuclear magnetic resonance spectrogram of the organosilicon polymer prepared in Example 1.

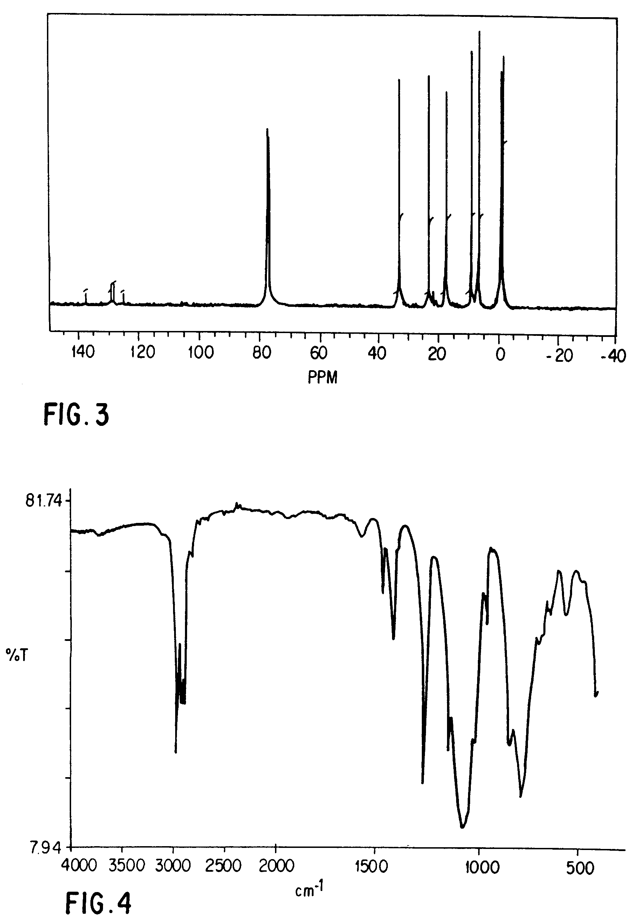

Figure 3 is the ¹³C-nuclear magnetic resonance spectrogram of the organosilicon polymer prepared in Example 1.

Figure 4 is the Fourier-transform infrared absorption spectrogram of the organosilicon polymer prepared in Example 2.

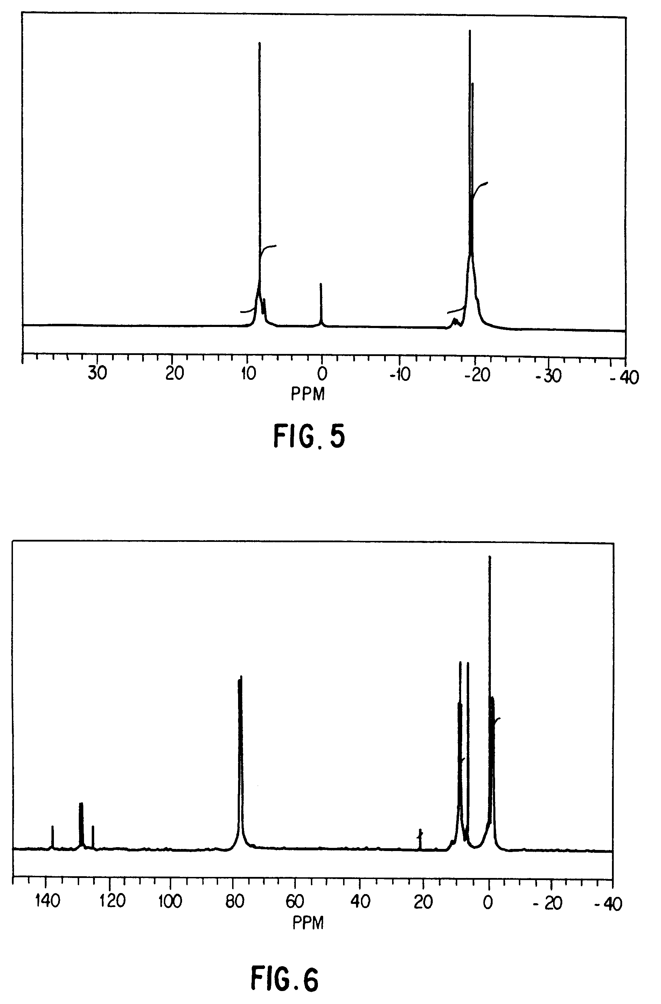

Figure 5 is the ²⁹Si-nuclear magnetic resonance spectrogram of the organosilicon polymer prepared in Example 2.

Figure 6 is the ¹³C-nuclear magnetic resonance spectrogram of the organosilicon polymer prepared in Example 2.

### Example 1

The following were introduced into a reactor and heated to 60°C: 60 g toluene, 0.9 g 0.5% Pt-on-carbon powder, and 59.2 g (0.2 mol) of a 1 : 1 mixture of diethyltetramethylcyclotetrasiloxane with the formula 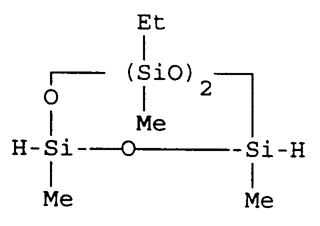
and diethyltetramethylcyclotetrasiloxane with the following formula 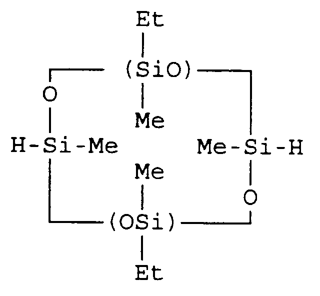
A mixture of 16.4 g (0.2 mol) 1,5-hexadiene and 16 g toluene was then added dropwise with stirring. After the completion of addition, the mixture was heated and held for 8 hours under reflux at 110°C. Subsequent filtration and distillation of the volatiles under reduced pressure gave 75.7 g of a viscous liquid. The yield was 99%. Analysis of this viscous liquid product by ¹³C-nuclear magnetic resonance spectroscopy (¹³C-NMR), ²⁹Si-nuclear magnetic resonance spectroscopy (²⁹Si-NMR), and Fourier-transform infrared spectroscopy (FT-IR) confirmed it to be an organosilicon polymer composed of repeat units with the following formulas. 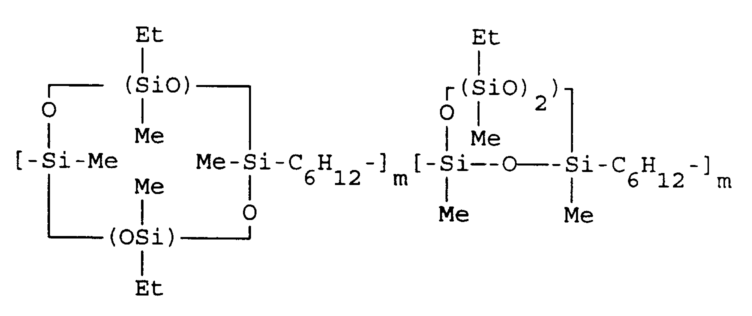
where m is an integer with a value of at least 1.

Analysis of this organosilicon polymer by gel permeation chromatography (GPC) gave a weight average molecular weight of 14,000 (polydimethylsiloxane basis), while the organosilicon polymer yield determined from the peak area was 98%. The organosilicon polymer had a refractive index of 1.448 at 25°C, a density of 1.01 g/cm³, a viscosity of 3,800 cP (mpa.s), and a surface tension of 26.7 mN/m.

### Example 2

The following were introduced into a reactor and heated to 60°C: 100 g toluene, sufficient platinum/divinyltetramethyl-disiloxane complex solution to provide a platinum metal content in the mixed system of 20 ppm, and 118.4 g (0.4 mol) of a 1 : 1 mixture of diethyltetramethylcyclotetrasiloxane with the formula 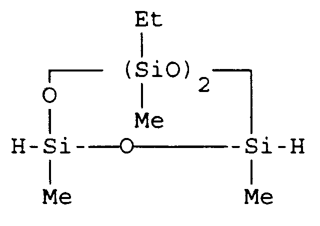
and diethyltetramethylcyclotetrasiloxane with the following formula 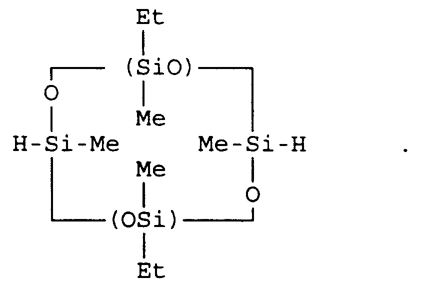
The system was heated to 90°C while stirring to homogeneity, and a mixture of 74.4 g (0.4 mol) 1,3-divinyltetramethyldisiloxane and 50 g toluene was then added dropwise with stirring. After the completion of addition, the mixture was heated for 5 hours under reflux at 110°C. Subsequent filtration and distillation of the volatiles under reduced pressure gave 189 g of a viscous liquid. The yield was 98%. Analysis of this viscous liquid product by ¹³C-NMR, ²⁹Si-NMR, and FT-IR confirmed it to be organosilicon polymer composed of repeat units with the following formula. 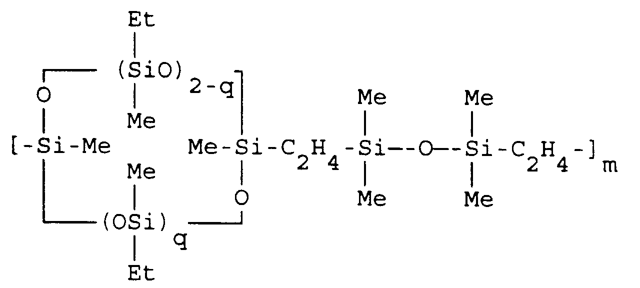
where q is zero or 1 and m is an integer with a value of at least 1.

Analysis of this organosilicon polymer by GPC gave a weight average molecular weight of 67,000 (polydimethylsiloxane basis), while the organosilicon polymer yield determined from the peak area was 90%. The organosilicon polymer had a refractive index of 1.445 at 25°C, a density of 1.00 g/cm³, a viscosity of 36,800 cP (mpa.s), and a surface tension of 24.2 mN/m.

The organosilicon polymers according to the present invention are viscous liquids at room temperature and have surface tensions higher than conventional polydimethylsiloxanes. The preparative methods of our invention are facile methods that provide novel organosilicon polymers in high yields.

## Claims

1. A compound comprising an organosilicon polymer with a degree of polymerization of 2-10,000 and a main chain comprising repeating units of the formula: 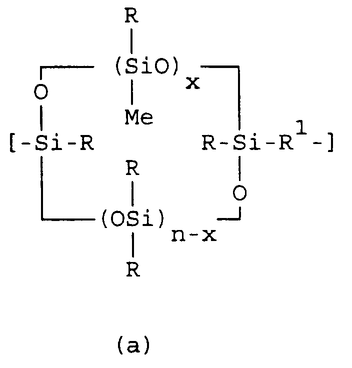 in which R represents C₁ to C₁₀ monovalent hydrocarbon groups that are free of aliphatically unsaturated bonds, R¹ represents C² to C¹⁰ alkylene groups and organic groups with the formula -R²(OR²)_{y}-, R² represents C₂ to C₂₀ alkylene groups, y is an integer with a value of at least 1, n is an integer with a value from 1 through 13, x is an integer with a value from 0 through 13, and n ≧ x.

2. A compound comprising an organosilicon polymer with a degree of polymerization of 2-10,000 and a main chain comprising repeating units of the formula: 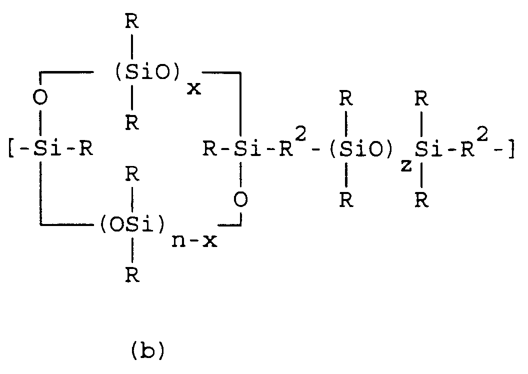 in which R represents C₁ to C₁₀ monovalent hydrocarbon groups that are free of aliphatically unsaturated bonds, R² represents C₂ to C₂₀ alkylene groups, n is an integer with a value from 1 through 13, x is an integer with a value from 0 through 13, and n ≧ x.

3. A method of making the organosilicon polymers of claim 1 comprising addition polymerizing
(A) a cyclic siloxane with the formula 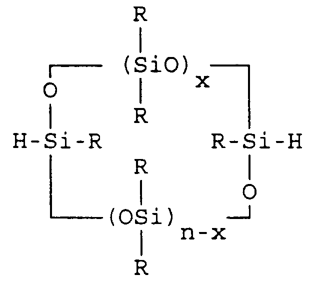 in which R represents C₁ to C₁₀ monovalent hydrocarbon groups that are free of aliphatically unsaturated bonds n is an integer with a value from 1 through 13, x is an integer with a value from 0 through 13, and n ≧ x
with
(B) a compound selected from C₃ to C₁₀ unsaturated aliphatic hydrocarbons that contain 2 carbon-carbon double bonds, C₂ to C₁₀ unsaturated aliphatic hydrocarbons that contain 1 carbon-carbon triple bond, and compounds with the formula R³(OR²)ₚOR³, in which R² represents C₂ to C₂₀ alkylene groups, R³ represents C₂ to C₂₀ alkenyl groups, and p is zero or an integer with a value of at least 1, in the presence of
(C) a hydrosilylation-reaction catalyst.

4. A method of making the organosilicon polymers of claim 2 comprising addition polymerizing
(A) a cyclic siloxane with the formula 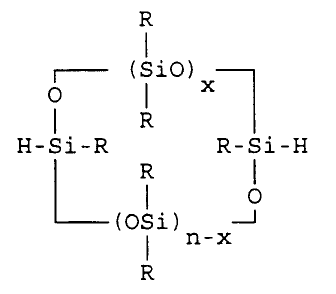 in which R represents C₁ to C₁₀ monovalent hydrocarbon groups that are free of aliphatically unsaturated bonds, n is an integer with a value from 1 through 13, x is an integer with a value from 0 through 13, and n ≧ x
with
(B') an alkenyl-endblocked organosilicon compound with the following general formula 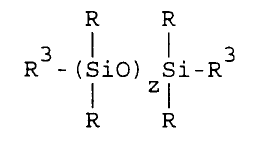 where R represents C₁ to C₁₀ monovalent hydrocarbon groups that are free of aliphatically unsaturated bonds, R³ represents C₂ to C₂₀ alkenyl groups, and z is in the range from 0 to 200,
in the presence of
(C) a hydrosilylation-reaction catalyst.
